# EUROPÄISCHE PATENTSCHRIFT

(11) **EP 0 580 024 B1**
(45) Veröffentlichungstag und Bekanntmachung des Hinweises auf die Patenterteilung: **06.05.1999**
(21) Anmeldenummer: 93110914.4
(22) Anmeldetag: 08.07.1993
(51) Int. Cl.: G01N 27/83, G01N 27/82

(54) **Verfahren zum Erkennen von Fehlstellen in Stahlcordmaterial**
Method for the detection of flaws in steel cord material
Méthode pour la détection des défauts dans des matériaux à corde d'acier

(30) Priorität: 15.07.1992 DE 4223248
(43) Veröffentlichungstag der Anmeldung: 26.01.1994
(73) Patentinhaber: Continental Aktiengesellschaft, 30165 Hannover (DE)
(72) Erfinder: Kaefer, Michaela, D-30900 Wedemark (DE); Bosch, Werner, D-30823 Garbsen (DE)

(56) Entgegenhaltungen:
- EP-A- 0 027 368
- DE-A- 2 427 647
- DE-A- 2 712 633
- DATABASE WPI Week 9102, Derwent Publications Ltd., London, GB; AN 91013883 & SU-A-1 545 139

## Beschreibung

Die Erfindung betrifft ein Verfahren zum Erkennen von Fehlstellen (Spacing-Erkennung) in der Cordverteilung von gummiertem Stahlcordmaterial mit parallelen Stahlcorden von Reifenaufbauteilen.

Bei der Reifenherstellung werden als Halbfabrikate gummierte Stahlcordstreifen verwendet, bei denen in einer dünnen Gummischicht Stahldrähte oder Stahllitzen in Cordlage angeordnet sind, d.h. parallel zueinander verlaufen. Derartige Stahlcordstreifen werden bei der Gürtelherstellung sowie für die Herstellung von Karkassen für LKW-Reifen wie auch für weitere Reifeneinlagen verwendet. Es ist für die Qualität des Endprodukts äußerst wichtig, daß diese Stahlcordstreifen keine Fehlstellen aufweisen, d.h., daß nicht einzelne Drähte teilweise oder gänzlich fehlen. Bisher werden zur Erkennung derartiger Fehlstellen optische, visuelle Oberflächenkontrollen durchgeführt. Es kommen weiterhin Röntgenanlagen zum Einsatz. Die visuellen Oberflächenkontrollen sind nicht sehr zuverlässig. Die Röntgenanlagen sind sehr kostenintensiv und haben einen hohen Platzbedarf in der Fabrik.

In der EP-A- 0 027 368 wird ein Verfahren zum Anzeigen von Metallschwund in Kabeln, kabelverstärkten Förderbändern und Eisenbahnschienen aufgrund von Korrosion, Brüchen und Dehnungen beschrieben, wobei das Verfahren bei im Einsatz befindlichen Endprodukten angewandt wird. Das Verfahren wird in einem im wesentlichen homogenen Magnetfeld durchgeführt, in dem oberhalb und unterhalb des Prüflings ein magnetisches Joch angebracht wird und die Messung exakt in Längsrichtung der Stahldrähte erfolgt. Das Verfahren ermittelt keine Fehlstellen im Sinne von fehlenden Drähten oder zu großen Abständen zwischen zwei Drähten, sondern metallische Schwachstellen innerhalb eines einzelnen Drahtes. In der Druckschrift wird weiterhin ein Verfahren offenbart, mit dem das Querprofil des Gummis an einem Förderband, also die Gummiprofildicke in Querrichtung, ermittelt werden kann. Dabei wird ein einzelnes Joch auf einer Seite des Prüflings angeordnet und quer zum Förderband bewegt.

Aus der JP-A- 1154735 ist ein Verfahren zum Erkennen von Stahlcorden von Stahlcordmaterial mit parallelen Stahlcorden in der Reifenherstellung bekannt. Aufgrund der relativen Bewegung zwischen einem Sensor mit eingebautem Dauermagneten und dem Stahlcordmaterial wird eine Magnetfeldänderung bewirkt. Die Messung ermöglicht eine unmittelbare Erkennung des Vorhandenseins eines einzelnen Stahlcords. In einem weiteren Schritt werden die Intervalle zwischen den Stahlcorden dann unter Heranziehung der Geschwindigkeit errechnet und danach das gedeutete Ergebnis ausgegeben. Die Aussagekraft des Ergebnisses ist unter anderem abhängig von der Genauigkeit der momentanen Geschwindigkeit. Bei stationären Vorgängen kann ein solches aufwendiges Verfahren hinsichtlich seiner Zuverlässigkeit bedingt ausreichend sein. Bei den in der Reifenherstellung üblichen dynamischen Förderungsbewegungen ist die erforderliche Zuverlässigkeit des Verfahrens zur Vermeidung von Fehlern selbst bei hohem Aufwand nicht gesichert.

Der Erfindung liegt deshalb die Aufgabe zugrunde, ein einfacheres und zuverlässigeres Verfahren zum Erkennen von Fehlstellen (Spacing-Erkennung) in gummiertem Stahlcordmaterial für Reifenaufbauteile anzugeben.

Diese Aufgabe wird erfindungsgemäß dadurch gelöst, daß die Erkennung von Fehlstellen (Spacing-Erkennung) nach dem magnetinduktiven Streuflußverfahren erfolgt, wobei zur Erkennung von Fehlstellen des Stahlcordmaterials eine Relativbewegung zwischen einem Detektor bzw. mehreren Detektoren zur Erkennung der Magnetfeldänderung nach dem magnetinduktiven Streuflußverfahren und dem Stahlcordmaterial erzeugt wird,
wobei zwischen der Bewegungsrichtung und dem Verlauf der Drähte im Stahlcord ein Winkel > 0° besteht, so daß sich das magnetische Streufeld bei der Bewegung ändert, und wobei die Änderung des magnetischen Streufelds und somit die Fehlstelle unmittelbar angezeigt wird.

Mit der Erfindung erreicht man den Vorteil einer wesentlich erhöhten Qualitätssicherung von Produkten. Fehler bei den Halbfabrikaten gelangen nicht mehr in das Endprodukt, fehlerhafte Endprodukte gelangen nicht mehr zum Verbraucher. Es wird somit der Ausschuß wesentlich verringert. Die Erfindung läßt sich nicht nur bei Halbfabrikaten einsetzen, sie ist ebenfalls in der Endkontrolle eines fertigen Reifens einsetzbar.

Nachfolgend wird ein Ausführungsbeispiel der Erfindung anhand einer Zeichnung näher erläutert.

Die einzige Figur zeigt schematisch
eine Vorrichtung zum Erkennen von Fehlstellen mit
einem darauf liegenden Stahlcordstreifen.

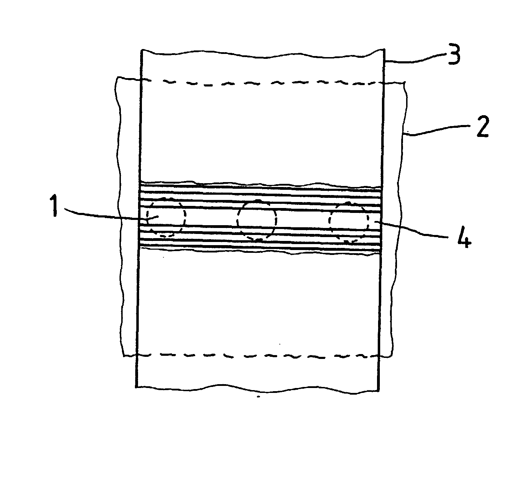

Die Vorrichtung besteht im wesentlichen aus einem oder mehreren Detektoren 1, die jeder für sich aus einem Sensor und einem Bediengerät bestehen. In dem beschriebenen Beispiel der Fig. 1, in dem Stahlcordstreifen von einer Breite bis zu 1 m geprüft werden, sollten mindestens drei Detektoren 1 nebeneinander angeordnet sein. Als Detektoren 1 eignen sich Detektoren vom Typ SND 6 der Firma Roland Electronic GmbH, D-7538 Keltern 2, die üblicherweise bisher zur Überwachung von Schweißnähten eingesetzt wurden. Oberhalb von den Detektoren 1 befindet sich eine Metallplatte 2, die z.B. aus VA-Stahl oder Messing bestehen kann und als Auflage für einen zu prüfenden Stahlcordstreifen 3 dient. Zur Prüfung auf Fehlstellen wird der Stahlcordstreifen 3 über die Metallplatte 2 hinweggezogen, wobei er zu den Detektoren 1 einen Abstand von ca. 3 mm hat. Im Beispiel der Figur verlaufen die Drähte im Stahlcord quer zur Bewegungsrichtung des Stahlcordstreifens 3. Sie können selbstverständlich auch schräg zur Bewegungsrichtung verlaufen, doch ist darauf zu achten, daß zwischen der Bewegungsrichtung und der Richtung der Drähte ein Winkel größer 0° besteht. Wenn eine Fehlstelle 4, die im Beispiel der Figur aus einem fehlenden Draht besteht, über die Detektoren 1 hinweggezogen wird, ändert sich das Magnetfeld und diese Änderung wird unmittelbar angezeigt. Der Stahlcordstreifen 1 kann dann angehalten werden und die Fehlstelle kanne entfernt werden, z.B. durch Herausschneiden. Somit ist durch das erfindungsgemäße Verfahren gewährleistet, daß nur noch einwandfreie Halbfabrikate zur weiteren Herstellung des Reifens herangezogen werden. Die Erfindung läßt sich zur Kontrolle aller metallischen Festigkeitsträger mit konstanter Drahtverteilung einsetzen.

## Patentansprüche

1. Verfahren zum Erkennen von Fehlstellen (Spacing-Erkennung) in der Cordverteilung von gummiertem Stahlcordmaterial mit parallelen Stahlcorden von Reifenaufbauteilen
**dadurch gekennzeichnet**,
daß die Erkennung der Fehlstellen (Spacing-Erkennung) nach dem magnetinduktiven Streuflußverfahren erfolgt,
wobei zur Erkennung von Fehlstellen des Stahlcordmaterials eine Relativbewegung zwischen einem Detektor bzw. mehreren Detektoren zur Erkennung der Magnetfeldänderung nach dem magnetinduktiven Streuflußverfahren und dem Stahlcordmaterial erzeugt wird,
wobei zwischen der Bewegungsrichtung und dem Verlauf der Drähte im Stahlcord ein Winkel > 0° besteht,
so daß sich das magnetische Streufeld bei der Bewegung ändert, und
wobei die Änderung des magnetischen Streufelds und somit die Fehlstelle unmittelbar angezeigt wird.

2. Verfahren zum Erkennen von Fehlstellen gemäß den Merkmalen von Anspruch 1,
wobei das gummierte Stahlcordmaterial streifenförmig ist.

3. Verfahren nach Anspruch 1 oder 2,
wobei ein oder mehrere nebeneinander angeordnete Detektoren (1) an das zu prüfende Material herangeführt werden.

## Claims

1. Method of detecting flaws (spacing detection) in the cord distribution of rubber-coated steel cord material with parallel steel cords of tyre building components, characterised in that the detection of the flaws (spacing detection) is effected according to the magnetic-inductive stray flux method, wherein, for the detection of flaws of the steel cord material, a relative movement is produced between a detector or respectively a plurality of detectors for detecting the change in magnetic field is produced according to the magnetic-inductive stray flux method and the steel cord material, wherein an angle > 0° exists between the direction of movement and the configuration of the wires in the steel cord, so that the magnetic stray field changes during the movement, and wherein the change in the magnetic stray field, and hence the flaw, is immediately indicated.

2. Method of detecting flaws according to the features of claim 1, wherein the rubber-coated steel cord material is strip-like.

3. Method according to claim 1 or 2, wherein one or more detectors (1), disposed adajacent one another, are supplied to the material to be examined.

## Revendications

1. Procédé de détection de lacunes (détection de spacing) dans la répartition des cordes d'un matériau caoutchouté à base de cordes d'acier, à cordes parallèles d'acier, faisant partie d'éléments structurels de pneumatiques,
caractérisé
en ce que la détection de lacunes (détection de spacing) s'effectue d'après le procédé à flux de dispersion d'une induction magnétique, un mouvement relatif entre un détecteur ou plusieurs détecteurs de détection de la modification du champ magnétique d'après le procédé à flux de dispersion d'une induction magnétique et le matériau à base de cordes d'acier étant généré pour la détection de lacunes du matériau à base de cordes d'acier.
un angle >0° subsistant entre la direction du mouvement et l'orientation des fils de la corde d'acier, de manière que le champ magnétique de dispersion varie lors du mouvement et
le changement du champ magnétique de dispersion et donc la lacune étant immédiatement indiqués.

2. Procédé de détection de lacunes selon les particularités de la revendication 1,
le matériau caoutchouté à base de cordes d'acier étant en forme de bande.

3. Procédé selon la revendication 1 ou 2,
suivant lequel un ou plusieurs détecteurs juxtaposés (1) sont guidés à proximité du matériau à contrôler.
